(19) Europäisches Patentamt / European Patent Office / Office européen des brevets

(11) **EP 4 071 125 B1**

(12) **EUROPEAN PATENT SPECIFICATION**

(45) Date of publication and mention
of the grant of the patent:
**25.02.2026 Bulletin 2026/09**

(21) Application number: **21167200.1**

(22) Date of filing: **07.04.2021**

(51) International Patent Classification (IPC):
**C04B 28/06** (2006.01)     C04B 111/40 (2006.01)
C04B 111/28 (2006.01)     C04B 111/34 (2006.01)

(52) Cooperative Patent Classification (CPC):
(C-Sets available)
**C04B 28/06;** C04B 2111/00431; C04B 2111/28;
C04B 2111/34; C04B 2111/40          (Cont.)

(54) **COMPOSITION OF HEAT-INSULATING LIGHTWEIGHT COMPOSITE MATERIAL**

ZUSAMMENSETZUNG EINES WÄRMEDÄMMENDEN LEICHTGEWICHTIGEN
VERBUNDMATERIALS

COMPOSITION DE MATÉRIAU COMPOSITE LÉGER THERMO-ISOLANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.10.2022 Bulletin 2022/41**

(73) Proprietor: **Vilniaus Gedimino technikos
universitetas
10223 Vilnius (LT)**

(72) Inventors:
• **Antonovic, Valentin**
**LT-10103 Vilnius (LT)**
• **Boris, Renata**
**LT-11223 Vilnius (LT)**
• **Malaiskiene, Jurgita**
**LT-08444 Vilnius (LT)**
• **Stonys, Rimvydas**
**LT-14304 Vilnius (LT)**

(74) Representative: **Klimaitiene, Otilija
AAA Law
A. Gostauto 40B
03163 Vilnius (LT)**

(56) References cited:
**WO-A1-2019/222861**

• **STONYS R ET AL: "Reuse of ultrafine mineral
wool production waste in the manufacture of
refractory concrete", JOURNAL OF
ENVIRONMENTAL MANAGEMENT, ELSEVIER,
AMSTERDAM, NL, vol. 176, 6 April 2016
(2016-04-06), pages 149 - 156, XP029515225,
ISSN: 0301-4797, DOI: 10.1016/
J.JENVMAN.2016.03.045**
• **DATABASE WPI Week 201831, Derwent World
Patents Index; AN 2018-33028G, XP002804275**

**(Cont. next page)**

(52) Cooperative Patent Classification (CPC): (Cont.)

C-Sets
**C04B 28/06, C04B 14/02, C04B 14/06, C04B 14/24, C04B 14/46, C04B 40/0028, C04B 40/0067,**

**C04B 40/0263, C04B 2103/12, C04B 2103/40; C04B 28/06, C04B 14/24, C04B 14/46, C04B 18/146, C04B 20/0036, C04B 40/0028, C04B 40/0067, C04B 40/0263, C04B 2103/12, C04B 2103/40**

**Description**

TECHNICAL FIELD

This invention relates to construction technologies and insulating refractory materials. More specifically, it discloses a composition for a heat-insulating lightweight composite material, the composite material itself which is strong, lightweight and heat-resistant, and a production method of obtaining that composite material from the invented composition. The composition, method and resulting composite material are suitable for the installation of a thermal insulating protective layers in the linings of energy equipment.

BACKGROUND ART

Materials for the thermal insulation layer of energy equipment can be produced by using various technologies. The porosity of such materials should be greater than >45%, and this is achieved by the use of flammable additives (sawdust, polystyrene granules, fine coke, hollow microspheres, etc.) or chemical pore-forming admixtures (organic foam, aluminum-based, etc.). The use of said additives significantly increases porosity, reduces density and thermal conductivity, which also depends on the size of the pores, their shape, the number of contacts between solid particles, crystalline and amorphous components, temperature, etc. The main function of the materials used for the thermal insulation layer in the modern energy equipment industry is to retain heat and maintain the mechanical effect and not to deform up to 800°C.

Various lightweight refractory materials for the protective layer of boiler liners are currently widely used. However, they are usually of low thermal conductivity and low strength, or if their strength is higher, then the density and thermal conductivity are quite high. Therefore, it is important to develop a lightweight composite refractory material for operation at temperatures up to 800°C and with lower thermal conductivity and higher strength. In order to save natural raw materials and reduce landfill and environmental pollution, the material contains up to 49% of recyclable materials with pozzolanic properties (aluminosilicate-based waste from the mineral stone wool production process), inert (amorphous silicon-based) and lightweight aggregates made from used glass waste with a density of 670-800 $kg/m^3$. The price of refractory materials is often around 50% of the price of the entire heating installation. Unfortunately, under certain conditions, their longevity is somewhat up to 2 years (based on practical observations in many real objects). Recently, with the introduction of biofuels and the incineration of various types of waste, frequent repairs to the linings of power plants have begun, due to the breakdown of refractory materials. By expanding the use and recycling of biofuels, medical and municipal waste, the development of new materials and the use of recycled and reusable materials would ensure more efficient operation of energy facilities in European countries and around the world. In addition, it is important to modernize old heating equipment in oil, chemical, ceramic, wood and other industries by applying new lightweight composite refractory materials.

The US patent US3341339A (1965) discloses a lightweight insulating castable refractory composition characterized by low shrinkage at firing temperatures, which is prepared from: about 30 to about 70 parts of vesicular granules of thermally bloated clay having a pyrometric cone equivalent of at least 20 Orton, which granules themselves exhibit substantial shrinkage upon firing; about 15 to about 55 parts by crude kyanite, and about 15 to about 40 parts of calcium aluminate cement. The density of the obtained material after drying at 110°C temperature is 990-1300 $kg/m^3$, compressive strength - 4.4-8.5 MPa; after thermal treatment at temperature of 1090°C - the density is 950-1200 $kg/m^3$, and the compressive strength is 2.1-9.5 MPa.

Another US patent US3010835A (1958) discloses forming a light weight refractory castable including a low melting refractory material and a stable non-shrinking highly re fractory mixture including a binder. In the preferred composition, the low melting refractory material is expanded perlite, the stable non-shrinking refractory mixture comprises finely ground raw kyanite and finely ground calcined flint fire clay, and the binder is high purity calcium aluminate cement. The lightweight insulating refractory concrete is made of perlite 6-12%, raw kyanite 15-40%, calcined flint fire clay 30-55%, calcium aluminate cement 20-35% (US3010835). The density of the obtained material after drying at 110°C is 1185-1265 $kg/m^3$, the compressive strength is 3.4MPa. The density and compressive strength are sufficient for these different products. However, there is a need to develop even lighter and stronger materials for the protection of thermal equipment structures.

The Chinese patent CN102491766B (2011) describes a refractory material, in particular a calciclase light heat-insulating refractory material and a preparation method thereof. The calciclase light heat-insulating refractory material is characterized by being prepared from the following raw materials in percentage by mass: 15 to 25 percent of kyanite, 50 to 60 percent of Shanxi mullite, 5 to 10 percent of wollastonite, 5 to 10 percent of aluminate cement, 5 to 15 percent of gypsum and 200 to 400 percent of active calcium silicate slurry through batching, forming and calcining. The density of such concrete is ~ 500 kg/m3, the thermal conductivity coefficient is 0.16-0.19 W/(m K). However, the compressive strength is only 1.2-1.5 MPa.

The USSR patent SU1724638A1 (1990) discloses an even lower density 230-250kg/$m^3$ refractory insulating

material with a thermal conductivity of 0.22-0.24 W/(m K) at 1100°C. The material with such properties comprises a composition of refractory aluminosilicate fiber (wt%: 20-30), silica gel (wt%: 58-78) and aluminum sulphate (wt%: 2-12). However, the strength of this substance has not been determined or disclosed in the patent.

European patent application EP0237609A1 (1986) discloses an insulating refractory and method for containing a molten metal such as molten aluminum in an insulating castable or moldable. It also overviews use of a lightweight refractory concrete containing a binder - alumina cement, and lightweight aggregate - vermiculite, perlite, expanded clay, cyanite, bauxite, crushed ceramic scrap, and chemical additive - lithium carbonate, and additional binder - a fire-resistant binder based on silicon.

There are also known solutions to reach low thermal conductance, high operating temperature, low density and high strength by layered, multilayered or other complex structures of a composite or several composites. For example, the European patent application EP1470912B1 discloses a layered composite for thermal protection, having high physical characteristics. However, such thermal protection solutions are more relevant to aircraft, spacecraft and missile technologies, where these advanced thermal protection inventions and solutions are too expensive and too complex for construction purposes.

Further, the paper Stonys et al: "Reuse of ultrafine mineral wool production waste in the manufacture of refractory concrete", Journal of Environmental Management, Elsevier, Amsterdam, NL, vol. 176, 6 April 2016 (2016-04-06), pages 149-156, XP029515225, ISSN: 0301-4797, DOI: 10.1016/j.jenvman.2016.03.045 - deals with the mineral wool production waste (cupola dust - CD), presents CD characterization and aims to reuse CD in production of refractory concrete with calcium aluminate cement. The study of CD covers its chemical, phase and thermal analyses along with the morphological study and determination of particles size distribution. Zeta-potential, electrical conductivity and pH values of CD suspension are presented in the paper as well. Commercial microsilica additive in refractory concrete has been replaced with cupola dust. Compositions of refractory concrete have been prepared by incorporating 1%, 2% and 3% of CD. The bulk density, ultrasonic wave velocity, cold crushing strength and thermal shock resistance of the created refractory concrete have been determined. Based on experimental results, it has been found that cupola dust may be used for the production of refractory concrete. The environmental impact related to the CD reuse in refractory concrete production has been evaluated as well.

The international patent application WO2019/222861 discloses lightweight concrete compositions for fiber-reinforced lightweight concrete and air-entrained lightweight concrete. Fiber-reinforced lightweight concrete compositions comprise calcium aluminate cement, fibers, expanded glass granulate having a diameter of at most about 2mm, water, and optionally at least one of talc, fly ash, cenospheres, a superplasticizer and a viscosity agent. Air-entraining lightweight concrete compositions comprise a foam and/or air-entraining agent, calcium aluminate cement, expanded glass granulate having a diameter of at most about 4mm, water, and optionally at least one of cenospheres, and a superplasticizer. The lightweight concrete compositions are useful to make fire doors. Fire door frames can be made from the fiber-reinforced lightweight concrete compositions and door cores made from the air-entrained lightweight concrete compositions.

The Chinese patent application CN107954746A discloses a kind of micropore flint clay light fire brick, including major ingredient and pulp-water, the major ingredient include the material of following mass percents: Flint clay bulky grain 20%~30%, calcium aluminate fine powder 18%~28%, aluminosilicate refractory fiber 25%~30%, crystal whisker of hexa potassium titanate 5%~9%, expanded graphite 0.08%~0.12%, hollow glass micropearl 3%~5%, aerosil 5%~9%, the quality of the pulp-water are the 5%~8% of the major ingredient quality.The micropore flint clay light fire brick component collocation is reasonable, material internal is formed with equally distributed micron order stomata so that product has good thermal shock resistance, preferable heat endurance and higher refractoriness under load. The present invention also provides a kind of preparation method of above-mentioned micropore flint clay light fire brick, this method step is simple, is easy to automated production. However, there is a need or demand to develop even lighter and stronger materials for the protection of thermal equipment structures. It should be obvious that lower thermal conductivity, density and higher strength allow to reduce the dimensions of the structure or formed products, while maintaining the properties specified in the design. The mechanical properties of the structure are also important for maintaining its own weight and the simplicity of machining. For example, when cutting a more strong panel, it will preserve its shape, will not crack, and will make assembly works much easier and faster. The lower density material will have lower thermal conductivity and therefore work more efficiently. Improved physical and mechanical properties will allow to thin the thermal insulation layer without losing strength and maintaining the required thermal insulation properties. Alternatively, the resulting material can be used in conventional thickness constructions where more effective insulation is required.

In order to surpass the complex characteristics of the above described refractory concretes and compositions, the present invention provides an advantageous composition for lightweight thermal concrete having high strength and low thermal conductivity.

# EP 4 071 125 B1

## SUMMARY OF THE INVENTION

The purpose and the solution to the problem is to create a lightweight insulating composite refractory material using recycled and reusable materials (such as scrap of glass and mineral wool). A number of studies have shown that the following raw materials are suitable for the production of the desired material: aluminous cement, aluminosilicate microspheres, dispersed chamotte filler, lightweight blown glass filler made from glass waste, scrap or waste from the process of manufacturing stone mineral wool with pozzolanic properties, an inert amorphous silicon-based additive and a chemical accelerator for the hydration process based on lithium carbonate.

The new concrete, after drying and thermal treatment at high temperatures, is lighter and stronger than other known light and refractory concretes with vermiculite, perlite and other light aggregates. It is also important to improve the physical, insulating, performance and mechanical properties of the refractory insulation material and to reduce shrinkage.

The invention is as defined by claims.

The composition is defined by claims 1 to 5.

The method of producing a strong, lightweight and heat-resistant composite material from this compostion is defined by claim 6.

The obtainable composite material and products (bricks, slabs, monolithic insulating layers of thermal equipment) made of it are defined by claim 7. The composite thermal insulation material comprises these components:

- stone mineral wool and glass scrap is recycled for the secondary use;
- the filler made of glass scrap;
- cement hydration regulating additives which neutralize the negative effect of stone mineral wool scrap on cement hydration;
- changing structures;
- resistant to alkaline effects;
- application temperature up to ≤1000°C.

The characteristic mechanical and physical properties up to 600°C due to structural features: compressive strength 7.0MPa; flexural strength 0.91 MPa; shrinkage 0.63%; thermal conductivity coefficient 0.209 W/(m K).

The characteristic mechanical and physical properties up to 800°C with changing structure: compressive strength 8.8 MPa; flexural strength 1.87 MPa; shrinkage 0.63%; thermal conductivity coefficient 0.247 W/(m K).

The lightweight composite insulating refractory material of the proposed composition has up to ~2.8 times higher compressive strength after drying at 110°C temperature, up to ~4 times higher compressive strength after thermal treatment at 800°C, 200-500kg/m$^3$ lower density after drying at 110°C temperature, 280-550kg/m$^3$ at a lower density after heat treatment at 800°C.

## DESCRIPTION OF DRAWINGS

To understand the specific characteristics of the composition and appreciate its practical applications, the following pictures and graphs are provided and referenced hereafter. Figures are given as examples and should not limit the scope of the invention.

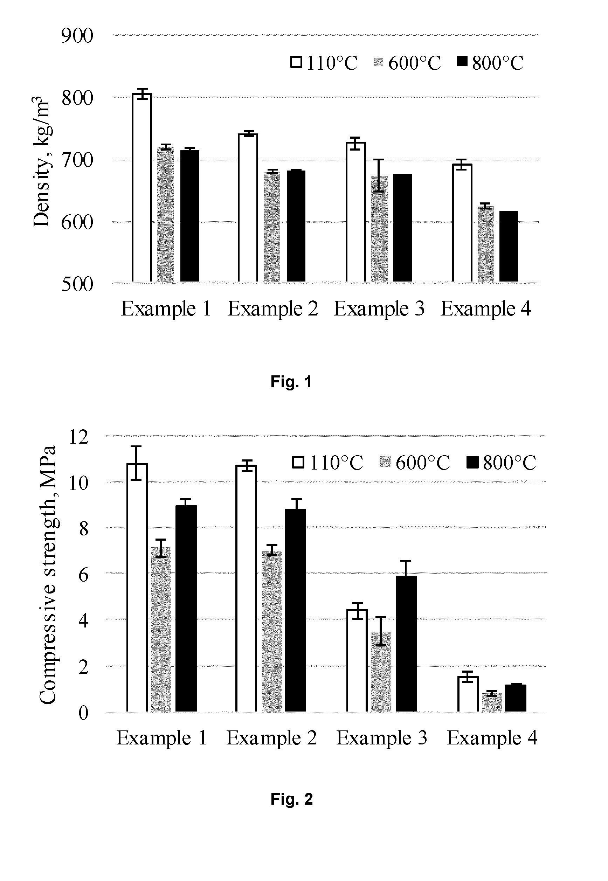

**Fig. 1** Graph of density of the prepared and tested composite samples;

**Fig. 2** Graph of compressive strength of the prepared and tested composite samples;

**Fig. 3** Principal technological diagram of preparation, hardening and heat-treatment of insulating refractory concrete samples.

## DRAWINGS - Reference Numerals

**1** Step of Mixing dry components in a Hobart mixer for 5 minutes;
**2** Step of Mixing the components with water in a Hobart mixer for 5 minutes;
**3** Step of Casting the mixture into molds and vibrating for 2 minutes;
**4** Step of Hardening at 20°C for 3 days;
**5** Step of Heat treatment 1: drying for 3 days (at 110°C);
**6** Step of Heat treatment 2: burning 5 hours (from 600°C to 800°C, by raising the temperature at the rate of 2,5°C/min).

DETAILED DESCRIPTION OF THE INVENTION

The solution to the technical problem is proposed by choosing the following composition of lightweight composite insulating refractory material, % by weight, defined in Table 1.

**Table 1. Proportions of components in the lightweight composite: proprtion ranges and most preferred proportions.**

| Component | Percentage range, by weight | Most preferred proportion, percentages, by weight |
|---|---|---|
| Aluminous cement ($Al_2O_3$ 51-55%) | 31-39% | 35% |
| Aluminosilicate microspheres | 12-20% | 16% |
| Scrap from the process of stone mineral wool production | 4-8% | 6% |
| Inert silicon-based additive | 2-4% | 3% |
| Foamed glass granules | 35-45% | 40% |
| dispersant - | 0.2-0.6%* | 0.4% |
| setting accelerator | 0.3-0.7% | 0.5% |
| Water | 28-32% | 30% |
| *- where chemical additives and water comprises additional wt% above the 100% weight of the dry components | | |

The size of the foamed glass granules is quite an important factor. Two fractions of 0.25-0.5 mm size and 1-2 mm size of granules were used. The amount of both size fractions is the same in the further Examples 1 and 2; and in the Examples 3 and 4 the more fine fraction of 0.25-0.5mm foamed glass granules was used. Foamed glass granules are rather light: the density of the 0.25-0.5mm-sized fraction is 340 kg/m$^3$, and the density of the 1-2mm-sized fraction is 230 kg/m$^3$.

The average size of the aluminosilicate microspheres is 90 $\mu$m. The particles are spherical with porous walls of ~10-15 $\mu$m in thickness. The bulk density is 410 kg/m$^3$.

Scrap from the process of stone mineral wool production is the ultra fine waste from the production of mineral wool. The bulk density is 200 kg/m$^3$, and size of 85% of ultrafine particles are in the range of 0.2-2 $\mu$m.

The lightweight composite insulating refractory material of the proposed composition has up to ~2.8 times higher compressive strength after drying at 110°C temperature, up to ~4 times higher compressive strength after thermal treatment at 800°C, 200-500kg/m$^3$ lower density after drying at 110°C temperature, 280-550kg/m$^3$ at a lower density after the heat treatment at 800°C.

In addition, it is possible to control the technological properties of the material according to weather or working conditions and to predict the structural properties of the refractory concrete.

The preferable amounts of components included in the composition were determined by experiments. There were tested 4 different composite examples comprising different proportions by weight of the above listed components.

Two examples (Example 2 and Example 3) were composed with nearly preferred proportions of the components for the desired properties of the composite, produced and tested.

Another two examples (Example 1 and Example 4) were produced and tested with different proportions where the desired properties of the composite appeared to be lower. These two examples were rejected as not suitable for embodiments of the present invention.

**Example 1** comprises 12% of aluminosilicate microspheres and 39% of aluminous cement ($Al_2O_3$ 51-55%). It was rejected as not effective because of too high density, due to which an increased (too high) thermal conductivity was obvious.

**Example 4** comprises 20% aluminosilicate microspheres and 31% of aluminous cement ($Al_2O_3$ 51-55%). It was rejected as not effective because of too low strenght, due to which fabrication and exploatation of the composite products (bricks, mortar layers) is complicated and disintegration risk for them is too high.

The most preferred embodiments illustrated by the Examples 2 and 3 of the refractory concrete composition.

**Example 2.** The composition of concrete in % by weight is as follows:

- aluminous cement ($Al_2O_3$ 51-55%) - 35%;

- aluminosilicate microspheres - 16%;

- Foamed glass granules (0.25-0.5mm and 1-2mm fractions, mixed by 50%/50% proportions of weight) - 40%;

- scrap from the process of stone mineral wool production - 6%;

- inert silicon-based additive - 3%;

- dispersant - 0.4%;

- setting accelerator - 0.5%;

- water - 30%.

**Example 3.** The composition of concrete in % by weight is as follows:

- aluminous cement ($Al_2O_3$ 51-55%) - 35%;

- aluminosilicate microspheres - 16%;

- Foamed glass granules (0.25-0.5mm fraction) - 40%;

- scrap from the process of stone mineral wool production - 6%;

- inert silicon-based additive - 3%;

- dispersant - 0.4%;

- setting accelerator - 0.5%;

- water - 30%.

Mechanical and physical properties of the produced refractory concrete Examples 1, 2,3 and 4 are given in Table 2.

**Table 2. Main features and advantages of the invention**

| Properties | Conditions | Example 1 | Example 2 | Example 3 | Example 4 |
|---|---|---|---|---|---|
| Density, kg/m$^3$ | hardening 48 hours | 880 | 810 | 797 | 775 |
| | 110°C | 805 | 740 | 725 | 690 |
| | 600°C | 720 | 680 | 674 | 625 |
| | 800°C | 715 | 680 | 675 | 615 |
| Ultrasonic pulse propagation velocity in samples, m/s | hardening 48 hours | 2800 | 2840 | 2460 | 2620 |
| | 110°C | 2600 | 2470 | 2250 | 2350 |
| | 600°C | 1725 | 1900 | 1620 | 1390 |
| | 800°C | 2340 | 2460 | 2210 | 2080 |
| Compressive strength, MPa | 110°C | 11.6 | 10.7 | 4.4 | 1.5 |
| | 600°C | 7.4 | 7.0 | 3.5 | 0.8 |
| | 800°C | 9.2 | 8.8 | 5.9 | 1.1 |
| Flexural strength, MPa | 110°C | 2.0 | 1.84 | 1.1 | 0.3 |
| | 600°C | 0.96 | 0.91 | 0.45 | 0.2 |
| | 800°C | 1.97 | 1.87 | 1.55 | 0.35 |

(continued)

| Properties | Conditions | Example 1 | Example 2 | Example 3 | Example 4 |
|---|---|---|---|---|---|
| Shrinkage, % | 600°C | 0.30 | 0.63 | 0.39 | 0.20 |
| | 800°C | 0.22 | 0.63 | 0.57 | 0.40 |
| λ, W/(m·K) (614°C) | 600°C | - | 0.209 | 0.224 | - |
| | 800°C | - | 0.247 | 0.252 | - |
| General porosity, % | 800°C | - | 77 | 75 | - |

The tests were performed in accordance with the requirements of LST EN ISO 1927 (5-6) standards. The propagation time $\tau$ of the ultrasonic pulse was measured with the device "Pundit 7" (transducer frequency 54 kHz) and the propagation speed of the ultrasonic pulse (V, m / s) was calculated according to the formula:

$$V = l / \tau; \qquad\qquad\qquad (1)$$

where : $l$ - specimen length, in meters; $\tau$ - signal propagation time, in seconds. The thermal conductivity coefficient was determined according to LST EN ISO 8894-1: 2010. The specific gravity and general porosity of the material were determined according to LST EN 993-2: 1995 and LST EN ISO 10545-3: 2018.

The above described refractory concrete has good technological properties, especially, low density and high mechanical properties, the ability to control the rheological properties of the concrete, also by taking into account different weather or working conditions, and to predict the properties of the concrete structure.

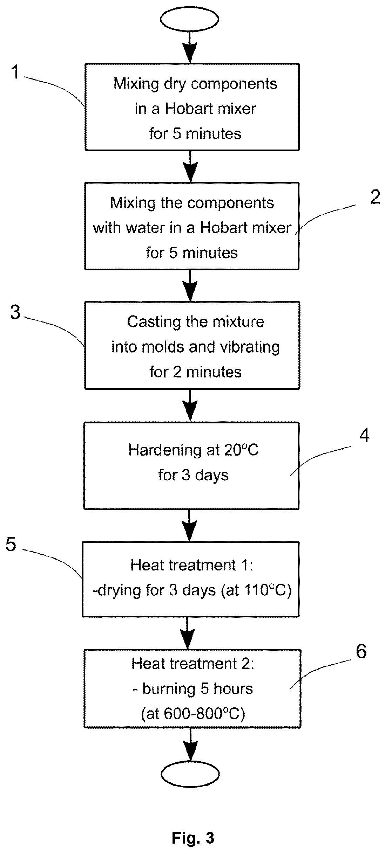

**Production tests.** The test materials are kept at 20 ± 1°C for 24 hours. The dry components are mixed in the laboratory in a Hobart mixer for 5 minutes, the mixing of the components with water is carried out for another 5 minutes. The molding of the mixtures and the vibration molds are carried out for 2 min. The samples are hardened for 3 days at 20 ± 1°C, afterwards, thr heat treatment at is done 110°C for 3 days, and afterwards, burning the mold products at temperatures from 600°C to 800°C for 5 hours, by raising the burning temperature by 2.5°C per minute. The composite shapes production process workflow and conditions are presented in Figure 3.

**Products from the composite.** The present composite material can be used for casting a monolithic insulating layer of thermal equipment, and producing "brick" or "slab" shaped products of the required dimensions, that can be formed in metal molds. The bending strength of the composite is measured for prisms with dimensions 160 × 40 × 40 milimeters.

## Claims

1. A composition for lightweight insulating refractory composite material comprising aluminate cement, **characterized in that** its components are included by the following proportion ranges of weight:

   - aluminous cement, with an Al2O3 content of 51-55%, - 31% to 39%;
   - aluminosilicate microspheres - 12% to 20%;
   - ultrafine waste of aluminosilicate stone mineral wool from the aluminate stone mineral wool production process, comprising ultrafine particles of aluminosilicate stone mineral wool wherein the size of 85% of said ultrafine particles are in the range of 0.2-2 μm, - 4-8%;
   - amorphous silicon-based inert additive - dispersion filler - 2-4%;
   - foamed glass granules - 35-45%, wherein the size of the foamed glass granules is in range from 0.25 mm to 2 mm;

   where the above components comprise 100% of dry components and over said 100% dry components, further the following components added in the proportions and ranges by weight:

   - dispersant - 0.2-0.6%;
   - setting accelerator - 0.3-0.7%;
   - water 28-32%.

2. The composition according to claim 1, **characterized in that** the preferred proportions of the components, by weight, are:

• aluminous cement (Al2O3 51-55%) - 35%;
• aluminosilicate microspheres - 16%;
• ultrafine waste of aluminosilicate stone mineral wool - 6%;
• amorphous silicon-based inert additive - dispersion filler - 3%;
• foamed glass granules - 40%, wherein the size of the foamed glass granules is in range from 0.25 mm to 2 mm; where the above components comprise 100% of dry components and over said 100% dry components, further the following components added in the proportions and ranges by weight:

• dispersant - 0.4%;
• setting accelerator - 0.5%;
• water - 30%.

3. The composition according to claim 1, **characterized in that** the ultrafine waste from the aluminosilicate stone mineral wool contains 9-11% of $Al_2O_3$ and 30-40% of $SiO_2$.

4. The composition according to claim 1, **characterized in that** the average size of the aluminosilicate microspheres is 90 $\mu$m and the particles are spherical with porous walls of 10-15 $\mu$m in thickness.

5. A method of preparing cast products from the composite according to claims 1 to 4, **characterized in that** it comprises at least steps of:

a) selecting ultrafine waste of aluminosilicate stone mineral wool from the aluminate stone mineral wool production process, said waste comprising ultrafine particles of aluminosilicate stone mineral wool wherein the size of 85% of said ultrafine particles are in the range of 0.2-2 $\mu$m, from a scrap of the aluminosilicate stone mineral wool;
b) Mixing the dry components of the composite in a Hobart mixer for 5 minutes;
c) Mixing the previously mixed components with water in a Hobart mixer for 5 minutes;
d) Casting the mixture into molds and vibrating for 2 minutes;
e) Hardening the molded mixture at 20°C for 3 days;
f) Treating the casting by heat: drying for 3 days at 110°C;
g) Treating the casting by heat: burning 5 hours at 600-800°C.

6. Lightweight insulating refractory cast products produced by the method according to claim 5 **characterized in that** said products are any of a brick-shaped, or a slab-shaped, or monolithic insulating layers of thermal equipment.

**Patentansprüche**

1. Zusammensetzung für ein leichtes, wärmedämmendes, feuerfestes Verbundmaterial, umfassend Aluminatzement, **dadurch gekennzeichnet, dass** seine Bestandteile in den folgenden Gewichtsanteilen beinhaltet sind:

• Aluminatzement, mit einem Al2O3-Gehalt von 51-55 %, - 31 % bis 39 %;
• Aluminiumsilikat-Mikrokugeln - 12 % bis 20 %;
• ultrafeiner Abfall aus Aluminiumsilikat-Steinwolle aus dem Herstellungsprozess von Aluminat-Steinwolle, umfassend ultrafeine Partikel aus Aluminiumsilikat-Steinwolle, wobei die Größe von 85 % der ultrafeinen Partikel in dem Bereich von 0,2-2 $\mu$m liegt - 4-8 %;
• amorphes, auf Silizium basierendes inertes Additiv - Dispersionsspachtel - 2-4 %;
• geschäumtes Glasgranulat - 35-45 %, wobei die Größe des geschäumten Glasgranulats im Bereich von 0,25 mm bis 2 mm liegt;

wobei die oben genannten Bestandteile 100 % trockene Bestandteile umfassen und zusätzlich zu den 100 % trockenen Bestandteilen ferner die folgenden Bestandteile in den folgenden Gewichtsanteilen und -bereichen hinzugefügt werden:

• Dispergiermittel - 0,2-0,6 %;
• Abbindebeschleuniger - 0,3-0,7 %;
• Wasser 28-32 %.

**2.** Zusammensetzung nach Anspruch 1, **dadurch gekennzeichnet, dass** die bevorzugten Anteile der Komponenten, bezogen auf das Gewicht, wie folgt sind:

- Aluminiumzement (Al2O3 51-55 %) - 35 %;
- Aluminiumsilikat-Mikrokugeln - 16%;
- ultrafeiner Abfall aus Aluminiumsilikat-Steinwolle - 6 %;
- amorphes, auf Silizium basierendes inertes Additiv - Dispersionsspachtel - 3 %;
- geschäumtes Glasgranulat - 40 %, wobei die Größe des geschäumten Glasgranulats im Bereich von 0,25 mm bis 2 mm liegt;

wobei die oben genannten Bestandteile 100 % trockene Bestandteile umfassen und zusätzlich zu den 100 % trockenen Bestandteilen ferner die folgenden Bestandteile in den folgenden Gewichtsanteilen und - bereichen hinzugefügt werden:

- Dispergiermittel - 0,4 %;
- Abbindebeschleuniger - 0,5 %;
- Wasser - 30 %.

**3.** Zusammensetzung nach Anspruch 1, **dadurch gekennzeichnet, dass** der ultrafeine Abfall aus der Aluminiumsilikat-Steinwolle 9-11 % $Al_2O_3$ und 30-40 % $SiO_2$ enthält.

**4.** Zusammensetzung nach Anspruch 1, **dadurch gekennzeichnet, dass** die durchschnittliche Größe der Aluminium-silikat-Mikrokugeln 90 $\mu$m beträgt und die Partikel kugelförmig sind und poröse Wände mit einer Dicke von 10-15 $\mu$m aufweisen.

**5.** Verfahren zum Fertigen von Gussprodukten aus dem Verbundwerkstoff nach einem der Ansprüche 1 bis 4, **dadurch gekennzeichnet, dass** es mindestens folgende Schritte umfasst:

a) Auswählen von ultrafeinem Abfall aus Aluminiumsilikat-Steinwolle aus dem Herstellungsprozess von Aluminat-Steinwolle, wobei der
Abfall ultrafeine Partikel aus Aluminiumsilikat-Steinwolle umfasst, wobei die Größe von 85 % der ultrafeinen Partikel in dem Bereich von 0,2-2 $\mu$m liegt, aus einem Stück der Aluminiumsilikat-Steinwolle;
b) Mischen der trockenen Bestandteile des Verbundwerkstoffs in einem Hobart-Mischer für 5 Minuten;
c) Mischen der zuvor gemischten Bestandteile mit Wasser in einem Hobart-Mischer für 5 Minuten;
d) Gießen der Mischung in Formen und Vibrieren lassen für 2 Minuten;
e) Härten der geformten Mischung bei 20 °C für 3 Tage;
f) Wärmebehandlung des Gussstücks: Trocknen 3 Tage lang bei 110 °C;
g) Wärmebehandlung des Gussstücks: Brennen 5 Stunden lang bei 600-800 °C.

**6.** Leichte, wärmedämmende, feuerfeste Gussprodukte, die durch das Verfahren nach Anspruch 5 hergestellt werden, **dadurch gekennzeichnet, dass** die Produkte eines von einer ziegelförmigen oder einer plattenförmigen oder monolithischen Wärmedämmschichten von thermischer Ausrüstung sind.

**Revendications**

**1.** Composition pour un matériau composite réfractaire isolant léger comprenant du ciment d'aluminate, **caractérisée en ce que** ses composants sont inclus dans les plages de proportions en poids suivantes :

- un ciment alumineux, avec une teneur en $Al_2O_3$ de 51 à 55 % : 31 % à 39 % ;
- des microsphères d'aluminosilicate : 12 % à 20 % ;
- des déchets ultrafins de laine minérale de roche aluminosilicatée issus du processus de production de laine minérale de roche aluminate, comprenant des particules ultrafines de laine minérale de roche aluminosilicatée dont la taille de 85 % desdites particules ultrafines est comprise dans la plage de 0,2 à 2 $\mu$m, 4 à 8 % ;
- un additif inerte à base de silicium amorphe - charge de dispersion : 2 à 4 % ;
- des granulés de verre expansé : 35 à 45%, dans lesquels la taille des granulés de verre expansé est comprise dans la plage de 0,25 mm à 2 mm ;

où les composants ci-dessus constituent 100 % de composants secs et, en plus desdits 100 % de composants secs, les composants suivants sont ajoutés dans les proportions et plages de poids suivantes :

- un dispersant : 0,2 à 0,6 % ;
- un accélérateur de prise : 0,3 à 0,7 % ;
- l'eau : 28 à 32%.

2. Composition selon la revendication 1, **caractérisée en ce que** les proportions préférées des composants, en poids, sont :

- un ciment alumineux ($Al_2O_3$ 51 à 55%) : 35% ;
- des microsphères d'aluminosilicate : 16 % ;
- des déchets ultrafins de laine minérale de roche aluminosilicatée : 6 % ;
- un additif inerte à base de silicium amorphe - charge de dispersion : 3 % ;
- des granulés de verre expansé : 40 %, dans lesquels la taille des granulés de verre expansé est comprise dans la plage 0,25 mm à 2 mm ;

où les composants ci-dessus comprennent 100 % de composants secs et, en plus desdits 100 % de composants secs, les composants suivants sont ajoutés dans les proportions et plages de poids suivantes :

- un dispersant : 0,4 % ;
- un accélérateur de prise : 0,5 % ;
- l'eau : 30 %.

3. Composition selon la revendication 1, **caractérisée en ce que** les déchets ultrafins de la laine minérale de roche aluminosilicatée contiennent 9 à 11 % d'$Al_2O_3$ et 30 à 40 % de $SiO_2$.

4. Composition selon la revendication 1, **caractérisée en ce que** la taille moyenne des microsphères d'aluminosilicate est de 90 $\mu$m et que les particules sont sphériques avec des parois poreuses de 10 à 15 $\mu$m d'épaisseur.

5. Procédé de préparation de produits moulés à partir du composite selon les revendications 1 à 4, **caractérisé en ce qu'**il comprend au moins les étapes suivantes :

a) la sélection des déchets ultrafins de laine minérale de roche aluminosilicatée issus du processus de production de laine minérale de roche d'aluminate, lesdits déchets comprenant des particules ultrafines de laine minérale de roche aluminosilicatée dans lesquelles la taille de 85 % desdites particules ultrafines est comprise dans la plage de 0,2 à 2 $\mu$m, à partir de rebuts de laine minérale de pierre aluminosilicate ;
b) le mélange des composants secs du composite dans un mélangeur Hobart pendant 5 minutes ;
c) le mélange des composants précédemment mélangés avec de l'eau dans un mélangeur Hobart pendant 5 minutes ;
d) le versement du mélange dans des moules et la soumission de celui-ci à des vibrations pendant 2 minutes ;
e) le durcissement du mélange moulé à 20°C pendant 3 jours ;
f) le traitement thermique de la pièce coulée : le séchage pendant 3 jours à 110 °C ;
g) le traitement thermique de la pièce coulée : la cuisson pendant 5 heures à 600 à 800 °C.

6. Produits coulés réfractaires isolants légers produits par le procédé selon la revendication 5, **caractérisés en ce que** lesdits produits sont sous forme de briques, sous forme de dalles ou des couches isolantes d'équipements thermiques sous forme monolithique.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3341339 A
- US 3010835 A
- CN 102491766 B
- SU 1724638 A1
- EP 0237609 A1
- EP 1470912 B1
- WO 2019222861 A
- CN 107954746 A

**Non-patent literature cited in the description**

- Reuse of ultrafine mineral wool production waste in the manufacture of refractory concrete. **STONYS et al.** Journal of Environmental Management. Elsevier, 06 April 2016, vol. 176, 149-156